# EUROPÄISCHE PATENTANMELDUNG

(11) **EP 1 174 067 A2**
(43) Veröffentlichungstag der Anmeldung: **23.01.2002**
(21) Anmeldenummer: 01117234.3
(22) Anmeldetag: 16.07.2001
(51) Int. Cl.: A47K 3/40

(54) **Randprofil für bodenbündige Duschwannen sowie Verfahren zu dessen Herstellung**

(30) Priorität: 18.07.2000 DE 20012419 U
(71) Anmelder: Koralle Sanitärprodukte GmbH, 32602 Vlotho (DE)
(72) Erfinder: Metz, Rudolf-Günther, 32105 Bad Salzuflen (DE)
(74) Vertreter: TER MEER STEINMEISTER & PARTNER GbR

(57) **Zusammenfassung**

Ein Randprofil für bodenbündige Duschwannen besteht aus einer im Querschnitt im wesentlichen umgekehrt-U-förmigen Abdeckung (22) aus gewölbtem, flachen Material und einer den Hohlraum des Randprofils vollständig ausfüllenden Füllung (32) aus einem durch ein Kunstharz gebundenen Kunststoffgranulat. Die Abdeckung wird nach dem erfindungsgemäßen Verfahren aus einem Flachmaterial-Streifen tiefgezogen und anschließend mit der Füllung gefüllt.

## Beschreibung

Die Erfindung betrifft ein Randprofil für bodenbündige Duschwannen sowie ein Verfahren zu dessen Herstellung.

In modernen Bädern ist es zunehmend üblich, auf herkömmliche Duschwannen aus Stahl oder Kunststoff zu verzichten und stattdessen eine Duschkabine vorzusehen, deren Boden unmittelbar durch den Fliesenboden des Bades gebildet wird. Eine derartige Lösung erlaubt einen bequemeren Einstieg in die Dusche, da es nicht notwendig ist, die oft relativ hohe Wand herkömmlicher Duschwannen zu überwinden. Im übrigen wird die genannte Ausführungsform besonders häufig verwendet in Verbindung mit Duschabtrennungen oder Duschkabinen aus Glas, vor allem aus klarem Glas, die zumeist nicht mit Schiebetüren, sondern mit schwenkbaren, scharniergelagerten Türen hergestellt werden. Diese Kombination ergibt ein besonders transparentes Erscheinungsbild, erleichtert die Reinigung und trägt zur Überwindung einiger weiterer Nachteile herkömmlicher Schiebetüren-Duschkabinen bei.

Randprofile der genannten Art bilden zumindest eine gewisse Begrenzung für den Boden der Duschkabine, durch die das auftreffende Wasser eingefangen und abgeleitet werden kann. Sie können als Abstützung für die Duschkabinenwände dienen, jedoch können diese Duschkabinenwände auch schwebend in Abstand oberhalb des Randprofils angeordnet sein.

Ein Randprofil der dargestellten Art wird beispielsweise in der WO 97/22287 gezeigt und beschrieben. Die DE 298 17 910 U1 offenbart ein "Tragelement", das offenbar in erster Linie zur Abstützung der Duschabtrennung dienen soll, aber auch die Funktion eines Randprofils im vorliegenden Sinne aufweist.

Das Randprofil gemäß der WO 97/22287 ist ein relativ kompliziertes Extrusionsprofil mit zwei parallelen Einschubrinnen für Glasscheiben, die mit Abdeckleisten für den Fall des Nichtgebrauchs versehen sind und einer insgesamt erheblichen Breite und erscheint daher als aufwendig und teuer.

In der DE 298 17 910 U 1 wird ein im Querschnitt im wesentlichen rechteckiges oder deichförmiges Profil dargestellt, über dessen Material und Herstellung nichts gesagt wird. In den Zeichnungen ist das Profil als massiver Materialstrang dargestellt, aber eine Herstellung als massiver Materialstrang wird bei den in Betracht kommenden Materialien kaum möglich und zumindest äußerst unwirtschaftlich sein.

Der vorliegenden Erfindung liegt die Aufgabe zugrunde, ein Randprofil der genannten Art zu schaffen, das kostengünstig und einfach herstellbar ist. Ferner soll ein Verfahren zur einfachen Herstellung des Randprofils geschaffen werden.

Diese Aufgabe wird erfindungsgemäß gelöst durch ein Randprofil, das besteht aus einer im Querschnitt im wesentlichen umgekehrt-U-förmigen Abdeckung aus gewölbtem Flachmaterial und einer den Hohlraum des Randprofils vollständig ausfüllenden Füllung aus einem durch ein Kunstharz gebundenen Kunststoff-Granulat.

Mit Hilfe des erfindungsgemäßen Verfahrens wird ein Flachmaterial-Streifen durch Tiefziehen zu einem U-Profil umgeformt, und der Hohlraum des U-Profils wird mit einer Füllung aus einem Kunststoffgranulat und einem als Bindemittel dienenden Kunstharz gefüllt.

Das Kunststharz ist insbesondere ein Polyurethan-Harz. Vorzugsweise wird in die Füllung eine Glasfaser-Verstärkung eingefügt.

Die gewölbte Abdeckung kann aus einem einfachen Plattenmaterial, beispielsweise aus Acryl, tiefgezogen werden. Es ist nicht notwendig, ein extrudiertes Teil zu verwenden. Angesichts der relativ einfachen und kostengünstigen Herstellung ist es möglich, das Profil in einer überlangen Ausführung als Standardgröße anzubieten, die von den Installateuren beim Einbau entsprechend gekürzt wird.

Vorzugsweise umfaßt das U-Profil der Abdeckung eine obere Oberfläche, die im wesentlichen waagerecht verläuft, sowie relativ kurze seitliche U-Schenkel.

Das erfindungsgemäße Randprofil kann beispielsweise in der Form eines Viertelkreises oder eines an der Ecke abgeschrägten Winkels für Eckduschen hergestellt werden.

Weitere Merkmale und Vorteile der Erfindung ergeben sich aus den Unteransprüchen.

Im folgenden werden bevorzugte Ausführungsbeispiele der Erfindung anhand der beigefügten Zeichnung näher erläutert.
- Fig. 1: zeigt eine Draufsicht auf eine erste Ausführungsform eines erfindungsgemäßen Randprofils;
- Fig. 2: ist eine entsprechende Draufsicht auf eine andere Ausführungsform;
- Fig. 3: zeigt einen Querschnitt durch ein Randprofil gemäß Fig. 1 oder 2, in das eine Glasfaser-Verstärkung von der Innenseite her eingearbeitet ist;
- Fig. 4: ist ein Querschnitt einer Ausführungsform eines Randprofils mit einer Füllung aus kunstharz-gebundenem Granulat.

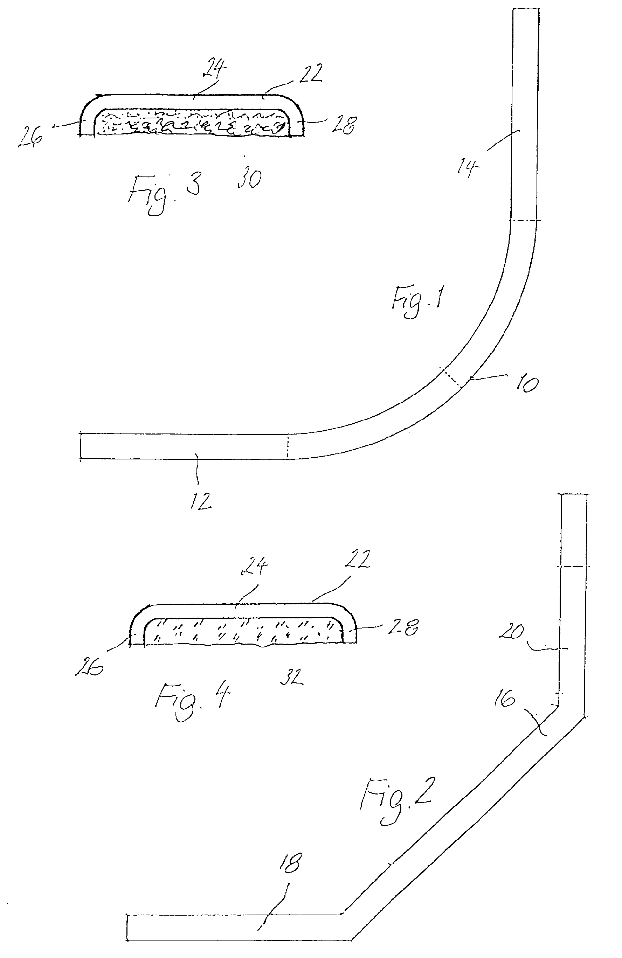

Fig. 1 zeigt ein Randprofil, das für eine Eckdusche vorgesehen ist und dessen Linienverlauf zusammengesetzt ist aus einem viertelkreisförmigen Abschnitt 10 sowie zwei geraden Verlängerungen 12,14 nach beiden Seiten. Diese Verlängerungen können mit Übermaß hergestellt werden, so daß der Installateur beim Einbau die Möglichkeit hat, das Randprofil durch Kürzung der Verlängerungen 12,14 den Erfordernissen des Einzelfalls anzupassen.

Fig. 2 zeigt ein Randprofil, das ebenfalls für eine Eckdusche vorgesehen ist und das zusammengesetzt ist aus einem geraden, schräg zur Ecke angeordneten Eckabschnitt 18 sowie zwei geraden Verlängerungen 20,22, die zu den beiden nicht gezeigten Wänden der entsprechenden Raumecke gerichtet sind.

Fig. 3 und 4 zeigen den Querschnitt eines erfindungsgemäßen Randprofils auf verschiedenen Herstellungsstufen. Das Randprofil umfaßt eine obere, gewölbte, im weitesten Sinne umgekehrt-U-förmige Abdeckung 22. Bei der dargestellten Ausführungsform weist die Abdeckung eine flache, im wesentlichen ebene obere Oberfläche 24 auf, von deren beiden seitlichen Rändern über große Radien verhältnismäßig kurze U-Schenkel 26,28 senkrecht nach unten gerichtet sind.

Die Abdeckung 22 kann aus einer Acryl-Platte durch Tiefziehen in einfacher Weise hergestellt werden. Dies ist wesentlich einfacher als die Herstellung eines Extrusionsteils.

Gemäß Fig. 3 befindet sich auf der inneren unteren Oberfläche der Abdeckung 12 eine schichtförmig aufgebrachte Glasfaserverstärkung 30, und gemäß Fig. 4 ist in den Hohlraum eine Füllung 32 aus einem mit Kunstharz gebundenen Polystyrol-Granulat eingefüllt. Mit Hilfe des Kunstharzes werden zugleich die Glasfasern der Glasfaserverstärkung 30 gebunden. Anschließend wird das Randprofil von der unteren Seite her glatt abgefräst, so daß das Randprofil flach und dicht gegen den Boden anliegt.

Eine Duschabtrennung oder Duschwand kann entweder unter Zwischenschaltung einer Dichtung unmittelbar auf das Randprofil aufgesetzt werden, oder sie kann auch im Abstand oberhalb des Randprofils enden. In jedem Falle bewirkt das Randprofil eine Überlaufschutz, der einen Wasseraustritt aus der Duschkabine verhindert. Eine nicht dargestellte, in der Ecke der Randprofile befindlichen Tür endet in jedem Fall oberhalb des Randprofils.

Die Form der beiden in Fig. 1 und 2 gezeigten Randleisten stellt nur ein Beispiel dar. Es kann jede für Duschkabinen geeignete Form hergestellt werden, also beispielsweise auch Randleisten in der Form eines Halbkreises, in der Form eines einseitig offenen Rechtecks oder auch eines einfachen geraden Abschnitts für eine Gebäudeseite gebildete Duschkabine.

## Patentansprüche

1. Randprofil für bodenbündige Duschwannen, **dadurch gekennzeichnet, daß** das Randprofil besteht aus einer im Querschnitt im wesentlichen umgekehrt-U-förmigen Abdeckung (22) aus gewölbtem flachen Material und einer den Hohlraum des Randprofils vollständig ausfüllenden Füllung (32) aus einem durch ein Kunstharz gebundenen Kunststoffgranulat.

2. Randprofil nach Anspruch 1, **dadurch gekennzeichnet, daß** die Abdeckung (22) eine flache obere Oberfläche (24) sowie kurze seitliche senkrechte U-Schenkel (26,28) aufweist.

3. Randprofil nach einem der Ansprüche 1 und 2, **dadurch gekennzeichnet, daß** die Abdeckung aus tiefgezogenem Acryl-Plattenmaterial besteht.

4. Randprofil nach einem der Ansprüche 1 bis 3, **dadurch gekennzeichnet, daß** in die Füllung (33) eine flächige Glasfaserverstärkung (30) eingearbeitet ist.

5. Randprofil nach einem der Ansprüche 1 bis 4, **dadurch gekennzeichnet, daß** die Füllung ein Polystyrol-Granulat enthält.

6. Randprofil nach einem der Ansprüche 1 bis 5, **dadurch gekennzeichnet, daß** die Füllung Polyurethanharz als Bindemittel enthält.

7. Randprofil nach einem der Ansprüche 1 bis 5, **dadurch gekennzeichnet, daß** die Füllung ein ungesättigtes Polyesterharz als Bindemittel enthält.

8. Verfahren zur Herstellung eines Randprofils für bodenbündige Duschwannen gemäß einem der vorhergehenden Ansprüche, **dadurch gekennzeichnet, daß** eine Abdeckung (22) des Randprofils aus einem Flachmaterial-Streifen durch Tiefziehen zu einem U-Profil umgeformt wird und daß der Hohlraum des U-Profils mit einer Füllung aus einem Kunststoff-Granulat, gebunden mit einem Kunstharz, gefüllt wird.

9. Verfahren nach Anspruch 8, **dadurch gekennzeichnet, daß** in die Füllung eine Glasfaser-Verstärkung (30) eingelegt wird.

10. Verfahren nach einem der Ansprüche 8 und 9, **dadurch gekennzeichnet, daß** die Glasfaser-Verstärkung (30) eine streifenförmige Matte ist.
